(19) **Europäisches Patentamt**

**European Patent Office**

**Office européen des brevets**

(11) **EP 0 649 766 B1**

(12) **EUROPEAN PATENT SPECIFICATION**

(45) Date of publication and mention
of the grant of the patent:
**22.07.1998 Bulletin 1998/30**

(51) Int. Cl.⁶: **B60K 31/04**

(21) Application number: **94202621.2**

(22) Date of filing: **12.09.1994**

(54) **Method and apparatus for controlling vehicle speed**

Verfahren und Vorrichtung zur Regelung der Geschwindigkeit eines Fahrzeuges

Procédé et appareil pour contrôler la vitesse d'un véhicule

(84) Designated Contracting States:
**DE FR IT**

(30) Priority: **26.10.1993 GB 9322029**

(43) Date of publication of application:
**26.04.1995 Bulletin 1995/17**

(73) Proprietor:
**GENERAL MOTORS CORPORATION**
**Detroit Michigan 48202 (US)**

(72) Inventors:
• **Ambroise, Francine-Anne**
  **B-6792 Halanzy (BE)**
• **Schmit, Paul Rene**
  **D 55129 Mainz (DE)**

(74) Representative:
**Denton, Michael John et al**
**Delphi Automotive Systems**
**Centre Technique Paris**
**117 avenue des Nations**
**B.P. 60059**
**95972 Roissy Charles de Gaulle Cedex (FR)**

(56) References cited:
• **PATENT ABSTRACTS OF JAPAN vol. 9, no. 242 (M-417) 28 September 1985 & JP-A-60 094 827 (NITSUSAN SHIYATAI K.K.) 28 May 1985**
• **PATENT ABSTRACTS OF JAPAN vol. 12, no. 464 (M-771) 6 December 1988 & JP-A-63 188 531 (FUJITSU TEN LTD.) 4 August 1988**

**Description**

The present invention relates to a method of controlling the speed of a vehicle and to vehicle speed control apparatus.

Systems for controlling vehicle speed, generally known as cruise control systems, are widespread. With most known cruise control systems, cruise control is disabled on the occurrence of certain events, such as on depression of the brake or clutch pedal or on actuation of a disabling switch. It is known to provide a resume function, enabled by a suitable switch, by which the speed of the vehicle can be controlled at the previously set speed following disablement. JP-A-63-188531 discloses a method and apparatus in accordance with the preambles of claims 1 and 5 respectively.

The present invention seeks to provide an improved method of controlling vehicle speed and improved speed control apparatus.

A method of and apparatus for controlling the speed of a vehicle in accordance with the present invention is characterised over JP-A-63-188531 by the features specified in the characterising portions of claims 1 and 5 respectively.

The inventors have recognised that for a vehicle with a manual transmission, a driver will often change gear to provide a more acceptable engine speed for the current conditions but without wanting to drop out of cruise control. For example, the driver may want to choose a high gear when travelling on a substantially flat road at a fairly constant speed to reduce engine noise. Similarly, when travelling up a hill, the driver may wish to change to a lower gear to prevent the engine labouring. In both of these situations, the driver may wish to maintain cruise control, which with conventional cruise control systems is only possible by manual actuation of the resume switch.

The transmission may be a conventional manual transmission or any other transmission which requires a driver actuated gear change command.

The method comprises the step of determining whether speed control prior to disengagement of the clutch is in a normal cruise control mode or a resume mode, the step of re-enabling speed control including the step of returning to the mode active prior to disengagement. This feature can allow, for example, the engine speed to be controlled by appropriate gear selection when accelerating from a low speed up to a higher set speed without dropping out of cruise control.

Advantageously, when it is determined that speed control was in a normal mode prior to disengagement of the clutch, the method may include the step of accelerating the vehicle to a set speed as a function of the difference between the vehicle speed and the set speed. The vehicle will normally decelerate during a gear change. This feature can provide for a suitable rate of acceleration of the vehicle back to the set speed.

In a preferred embodiment, wherein the step of accelerating the vehicle to the set speed includes the step of determining the acceleration from a look-up table on the basis of the difference between the vehicle speed and the set speed. Each acceleration value in the look-up table can be chosen experimentally so that the best acceleration can be provided for the determined conditions.

When it is determined that speed control was in a resume mode prior to disengagement of the clutch, the method may include the step of accelerating the vehicle to a set speed as a function of the difference between the vehicle speed and the set speed and as a function of a measure of the vehicle speed. The measure of vehicle speed may be the actual vehicle speed measured at the time of resumption of cruise control or the set speed stored in memory. The function is preferably of a type which causes lower relative acceleration at higher vehicle speeds and higher relative acceleration at lower vehicle speeds.

An embodiment of the present invention is described below, by way of illustration only, with reference to the accompanying drawings, in which:

Figure 1 is a block diagram of an embodiment of speed control apparatus; and
Figure 2 is a flow chart of the principal portion of an embodiment of routine for re-engaging speed control following a driver actuated gear change.

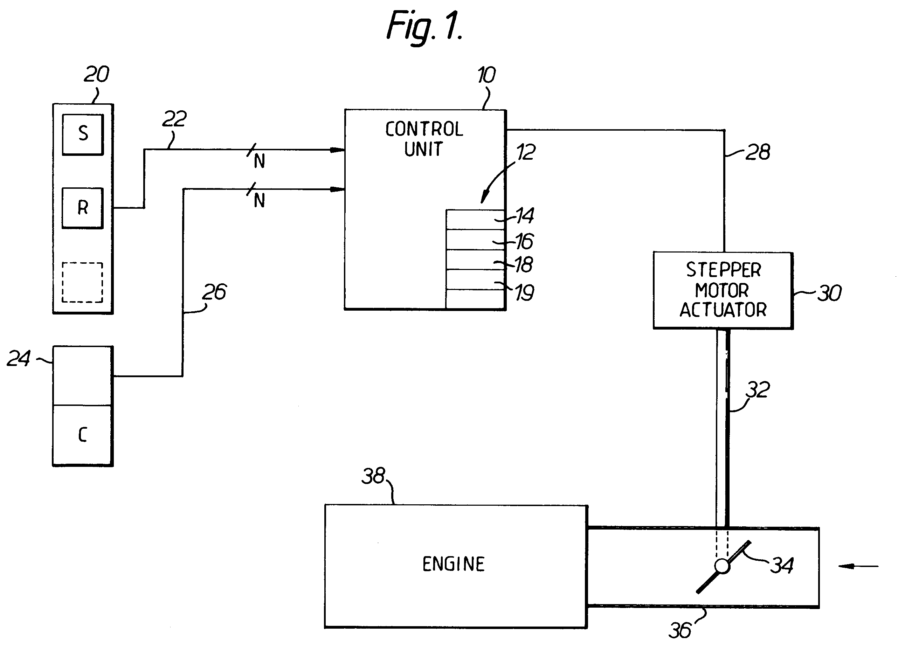

Referring to Figure 1, the embodiment of speed control apparatus shown includes a control unit 10 for providing and controlling a cruise control function in a vehicle having a manual transmission. The control unit 10 may be a dedicated cruise control unit or part of another vehicle control unit, such as a transmission control unit or an engine control unit, and includes a microprocessor and conventional associated components, which are not described further herein.

The control unit 10 includes one or more memories 12, including a memory or memory location 14 for storing the set or desired vehicle speed. A memory or memory location 16 for storing a first look-up table and a memory or memory location 18 for storing a second look-up table are provided for use in a resume function of a type which can cause the vehicle to accelerate to the set speed as a function of the difference between the vehicle speed and the set speed and as a function of a measure of the vehicle speed. The measure of vehicle speed may be the actual vehicle speed measured at the time of resumption of cruise control or the previously set speed. The function is preferably of a type which causes lower relative acceleration at higher vehicle speeds and higher relative acceleration at lower vehicle speeds.

A memory or memory location 19 provides a third look-up table, the use of which is described below.

Typically, the first, second and third look-up tables are stored in read only memory (ROM), while the set vehicle speed is stored in random access memory (RAM).

A set of control switches 20 is provided for controlling the various cruise control functions, only the set (S) and resume (R) switches being shown specifically in Figure 1. The control switches 20 are connected by suitable lines 22 to a first set of inputs of the control unit 10.

A plurality of sensors 24 are coupled to a second set of inputs to the control unit 10 through lines 26. The sensors 24 include a clutch sensor (C) for detecting disengagement and engagement of the vehicle clutch, together with sensors such as a vehicle speed sensor and other sensors required by the control unit 10. In the case of a vehicle having a conventional manual transmission, the clutch sensor (C) detects depression of the clutch pedal.

Connected to an output of the control unit 10, through a line 28, is a stepper motor actuator 30 which includes a stepper motor coupled via a Bowden cable 32 to the throttle blade 34 in the intake manifold 36 leading to engine 38.

In this embodiment, the stepper motor actuator 30 is of conventional form, so is not described further herein.

For normal cruise control, the control unit 10 operates in conventional manner. That is, when the driver actuates the set switch (S), the vehicle speed at the time is determined from the signal from the vehicle speed sensor and stored as the set speed in memory 14. The actual vehicle speed is then continuously monitored and if any deviation occurs from the set speed, the control unit 10 sends an appropriate signal to the stepper motor actuator 30 to cause the throttle blade to rotate to a more open or more closed position, as appropriate.

Should the driver depress the brake pedal while cruise control is active, the control unit 10 deactivates the cruise control function, disconnecting the cruise control stepper motor from the throttle blade 34, which then comes under driver control by means of the accelerator pedal (not shown).

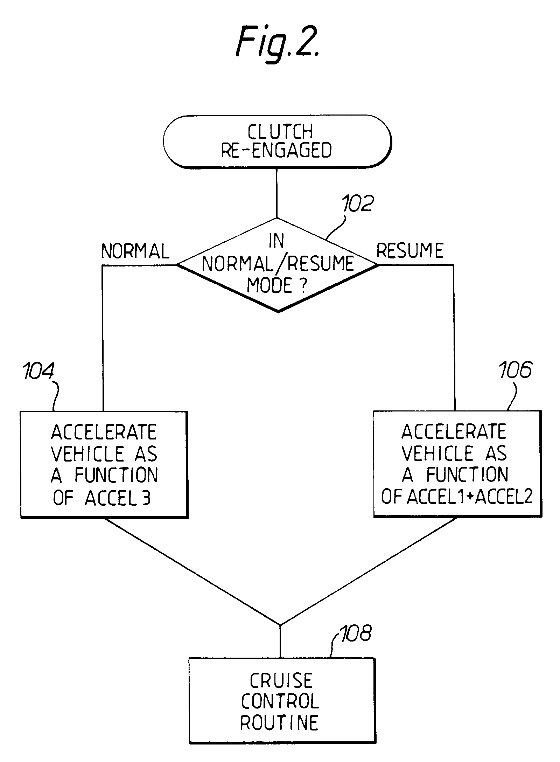

In a similar manner, should the driver depress the clutch pedal (in a vehicle having a conventional manual transmission) or otherwise request a gear change, thereby causing the clutch to be disengaged, the control unit 10 temporarily deactivates the cruise control function, disconnecting the cruise control stepper motor from the throttle blade 34. As soon as the clutch sensor (C) detects re-engagement of the clutch, the signal on the appropriate line 26 causes the control unit to reenable speed control, in the preferred embodiment by entering the routine shown in Figure 2.

Referring to Figure 2, the routine shown commences when the clutch sensor (C) detects that the clutch has been re-engaged, in a conventional manual transmission being determined when the clutch pedal is released.

In the first step of this routine, step 102, the control unit determines whether, prior to disengagement of the clutch, cruise control was in a normal cruise control mode or in a resume mode following depression of the resume switch (R). If it is determined that the system was in a normal cruise control mode, the routine passes to step 104 which accelerates the vehicle back to the set speed. Since in the majority of cases the vehicle will loose speed during a gear change, this routine accounts for this by providing suitable acceleration of the vehicle.

The amount of acceleration provided at step 104 is a function of the difference between the vehicle speed (VS) at the time of commencement of the routine and the memorised set speed (MS). In the preferred embodiment, step 104 accesses the third look-up table 19 to obtain a value of acceleration which is then sent to the stepper motor actuator 30 to control the degree of opening of the throttle valve 34. The values stored in the third look-up table 19 are determined experimentally to represent the most appropriate values of acceleration for their associated speed difference (VS-MS).

More specifically, step 104 obtains a value ACCEL RATE on the basis of the following equation:

$$\text{ACCEL RATE} = \text{ACCEL3(MS - VS)},$$

where ACCEL3 is the value obtained from the third look-up table 19 on the basis of the difference between the set speed (MS) and the vehicle speed (VS) and ACCEL RATE is representative of the degree of opening of the throttle blade.

Since the difference between the vehicle speed and the memorised set speed will in most instances be relatively small, it is not necessary to compensate for the vehicle speed in the manner of step 106 described below and in our co-pending British patent application referred to above.

Step 104 is repeated until the vehicle speed is within a predetermined amount of the set speed, at which point the routine moves to step 108 to pass to a conventional speed or cruise control routine.

Returning to step 102, if it is determined that the system was in the resume mode at the time it was disabled due to disengagement of the clutch, the routine passes to step 106.

In the preferred embodiment, step 106 calculates an acceleration rate for the vehicle as a function of the difference between the vehicle and set speeds and as a function of a measure of the vehicle speed, that is from the first and second look-up tables 16,18, in the manner described in the above-mentioned co-pending British patent application.

More specifically, step 106 obtains a value ACCEL RATE by means of the following equation:

$$\text{ACCEL RATE} = \text{ACCEL1(MS-VS)} + \text{ACCEL2(VS)},$$

where ACCEL1 is the value obtained from the first look-up table 16 on the basis of the difference between the set speed (M) and the vehicle speed (VS), ACCEL2 is the vehicle speed compensation value obtained from the second look-up table 18 on the basis of the vehicle speed (VS) and ACCEL RATE is representative of the degree of opening of the throttle blade.

Step 106 could be replaced by any other suitable resume function.

Once the vehicle speed is within a predetermined amount of the set speed, the routine moves from step 106 to step 108 to control the vehicle on the basis of a conventional cruise control routine.

## Claims

1. A method of controlling the speed of a vehicle including a transmission operable under driver control and speed control apparatus, comprising the steps of detecting (10,24,C) the disengagement of a transmission clutch during a driver actuated gear change, disabling (10,30) speed control on disengagement of the clutch, detecting (10,24,C) re-engagement of the clutch, and re-enabling (10,30) speed control on re-engagement of the clutch; characterised by the step (102) of determining whether speed control prior to disengagement of the clutch is in a normal cruise control mode or a resume mode, the step of re-enabling speed control (10,30) including the step (104-108) of returning to the mode active prior to disengagement.

2. A method according to claim 1, comprising, when it is determined that speed control was in the normal cruise control mode prior to disengagement of the clutch, the step (104) of accelerating the vehicle to a set speed as a function of the difference between the vehicle speed and the set speed.

3. A method according to claim 2, wherein the step (104) of accelerating the vehicle to the set speed includes the step of determining the acceleration from a look-up table (16) on the basis of the difference between the vehicle speed and the set speed.

4. A method according to claim 1, 2 or 3, comprising, when it is determined that speed control was in the resume mode prior to disengagement of the clutch, the step (106) of accelerating the vehicle to a set speed as a function of the difference between the vehicle speed and the set speed and as a function of a measure of the vehicle speed.

5. Speed control apparatus for controlling the speed of a vehicle including a transmission operable under driver control, the speed control apparatus comprising detecting means (10,24,C) for detecting disengagement and re-engagement of a transmission clutch during a driver actuated gear change, disabling means (10,30) responsive to the detecting means for disabling speed control on disengagement of the clutch, and enabling means (10,30) responsive to the detecting means for re-enabling speed control on re-engagement of the clutch;
characterised in that the speed control apparatus is adapted to operate in a normal cruise control mode or a resume mode and comprises determining means (102) for determining whether speed control prior to disengagement of the clutch is in the normal cruise control mode or the resume mode, the enabling means being adapted to return to speed control in the mode active prior to disengagement of the clutch.

6. Speed control apparatus according to claim 5, wherein the speed control apparatus is adapted to accelerate the vehicle to a set speed as a function of the difference between the vehicle speed and the set speed when speed control was in the normal cruise control mode prior to disengagement of the clutch.

7. Speed control apparatus according to claim 6, comprising a look-up table (16), the speed control apparatus being adapted to determine the acceleration of the vehicle to the set speed from the look-up table on the basis of the difference between the vehicle speed and the set speed.

8. Speed control apparatus according to claim 5, 6 or 7, wherein the speed control apparatus is adapted to accelerate the vehicle to a set speed as a function of the difference between the vehicle speed and the set speed and as a function of a measure of vehicle speed when speed control was in the normal cruise control mode prior to disengagement of the clutch.

## Patentansprüche

1. Verfahren zum Steuern der Geschwindigkeit eines Fahrzeuges, das ein Getriebe umfaßt, das unter der Steuerung eines Fahrers und einer Geschwindigkeitssteuerungsvorrichtung betätigt werden kann, mit den Schritten, daß das Außereingriffstehen einer Getriebekupplung während eines von einem Fahrer betätigten Gangwechsels detektiert

EP 0 649 766 B1

wird (10, 24, C), daß eine Geschwindigkeitssteuerung beim Außereingriffstehen der Kupplung gesperrt wird (10, 30), daß das Wiedereingriffstehen der Kupplung detektiert wird (10, 24, C), und daß die Geschwindigkeitssteuerung beim Wiedereingriffstehen der Kupplung wieder freigegeben wird (10, 30); gekennzeichnet durch den Schritt (102), daß bestimmt wird, ob die Geschwindigkeitssteuerung vor dem Außereingriffstehen der Kupplung in einem normalen Fahrtregelungsmodus oder in einem Wiederaufnahmemodus ist, wobei der Schritt des Wiederfreigebens der Geschwindigkeitssteuerung (10, 30) den Schritt (104-108) umfaßt, daß zu dem Modus zurückgekehrt wird, der vor dem Außereingriffstehen aktiv war.

2. Verfahren nach Anspruch 1, das, wenn bestimmt wird, daß die Geschwindigkeitssteuerung vor dem Außereingriffstehen der Kupplung in einem normalen Fahrtregelungsmodus war, den Schritt (104) umfaßt, daß das Fahrzeug als eine Funktion der Differenz zwischen der Fahrzeuggeschwindigkeit und der Sollgeschwindigkeit auf eine Sollgeschwindigkeit beschleunigt wird.

3. Verfahren nach Anspruch 2, wobei der Schritt (104) des Beschleunigens des Fahrzeuges auf die Sollgeschwindigkeit den Schritt umfaßt, daß die Beschleunigung aus einer Nachschlagtabelle (16) auf der Grundlage der Differenz zwischen der Fahrzeuggeschwindigkeit und der Sollgeschwindigkeit bestimmt wird.

4. Verfahren nach Anspruch 1, 2 oder 3, das, wenn bestimmt wird, daß die Geschwindigkeitssteuerung vor dem Außereingriffstehen der Kupplung in dem Wiederaufnahmemodus war, den Schritt (106) umfaßt, daß das Fahrzeug als eine Funktion der Differenz zwischen der Fahrzeuggeschwindigkeit und der Sollgeschwindigkeit und als eine Funktion eines Maßes der Fahrzeuggeschwindigkeit auf eine Sollgeschwindigkeit beschleunigt wird.

5. Geschwindigkeitssteuerungsvorrichtung zum Steuern der Geschwindigkeit eines Fahrzeuges, das ein Getriebe umfaßt, das unter der Steuerung eines Fahrers betätigt werden kann, wobei die Geschwindigkeitssteuerungsvorrichtung umfaßt: ein Detektiermittel (10, 24, C) zum Detektieren des Außereingriffstehens und Wiedereingriffstehens einer Getriebekupplung während eines von einem Fahrer betätigten Gangwechsels, ein Sperrmittel (10, 30), das auf das Detektiermittel anspricht, um die Geschwindigkeitssteuerung beim Außereingriffstehen der Kupplung zu sperren, und ein Freigabemittel (10, 30), das auf das Detektiermittel anspricht, um die Geschwindigkeit beim Wiedereingriffstehen der Kupplung wieder freizugeben; dadurch gekennzeichnet, daß die Geschwindigkeitssteuerungsvorrichtung derart ausgebildet ist, daß sie in einem normalen Fahrtregelungsmodus oder einem Wiederaufnahmemodus arbeitet, und ein Bestimmungsmittel (102) umfaßt, um zu bestimmen, ob die Geschwindigkeitssteuerung vor dem Außereingriffstehen der Kupplung in dem normalen Fahrtregelungsmodus oder dem Wiederaufnahmemodus ist, wobei das Freigabemittel derart ausgebildet ist, daß es zu der Geschwindigkeitssteuerung in dem Modus zurückkehrt, der vor dem Außereingriffstehen der Kupplung aktiv war.

6. Geschwindigkeitssteuerungsvorrichtung nach Anspruch 5, wobei die Geschwindigkeitssteuerungsvorrichtung derart ausgebildet ist, daß sie das Fahrzeug als eine Funktion der Differenz zwischen der Fahrzeuggeschwindigkeit und der Sollgeschwindigkeit auf eine Sollgeschwindigkeit beschleunigt, wenn die Geschwindigkeitssteuerung vor dem Außereingriffstehen der Kupplung in dem normalen Fahrtregelungsmodus war.

7. Geschwindigkeitssteuerungsvorrichtung nach Anspruch 6, die eine Nachschlagtabelle (16) umfaßt, wobei die Geschwindigkeitssteuerungsvorrichtung derart ausgebildet ist, daß sie die Beschleunigung des Fahrzeuges auf die Sollgeschwindigkeit aus der Nachschlagtabelle auf der Grundlage der Differenz zwischen der Fahrzeuggeschwindigkeit und der Sollgeschwindigkeit bestimmt.

8. Geschwindigkeitssteuerungsvorrichtung nach Anspruch 5, 6 oder 7, wobei die Geschwindigkeitssteuerungsvorrichtung derart ausgebildet ist, daß sie das Fahrzeug als eine Funktion der Differenz zwischen der Fahrzeuggeschwindigkeit und der Sollgeschwindigkeit und als eine Funktion eines Maßes der Fahrzeuggeschwindigkeit auf eine Sollgeschwindigkeit beschleunigt, wenn die Geschwindigkeitssteuerung vor dem Außereingriffstehen der Kupplung in dem normalen Fahrtregelungsmodus war.

**Revendications**

1. Procédé de commande de la vitesse d'un véhicule comportant une transmission pouvant être actionnée sous la commande d'un conducteur et un appareil de commande de vitesse, comportant les étapes consistant à détecter (10, 24, C) le débrayage d'un embrayage de transmission pendant un changement de rapport actionné par le conducteur, l'activation (10, 30) de la commande de vitesse lors du débrayage de l'embrayage, à détecter (10, 24, C) le réenclenchement de l'embrayage, et la réactivation (10, 30) de la commande de vitesse lors du réenclenchement

5

de l'embrayage ;

caractérisé en ce qu'il comporte l'étape (102) consistant à déterminer si la commande de vitesse avant le débrayage de l'embrayage est dans un mode normal de commande de vitesse de croisière ou dans un mode de reprise, l'étape de réactivation de commande de vitesse (10, 30) comportant l'étape (104 à 108) consistant à retourner au mode actif avant débrayage.

2. Procédé selon la revendication 1, comportant, lorsqu'on a déterminé que la commande de vitesse était dans le mode normal de commande de vitesse de croisière avant débrayage de l'embrayage, l'étape (104) d'accélération du véhicule à une vitesse de consigne en fonction de la différence existant entre la vitesse du véhicule et la vitesse de consigne.

3. Procédé selon la revendication 2, dans lequel l'étape (104) d'accélération du véhicule à la vitesse de consigne comporte l'étape consistant à déterminer l'accélération à partir d'une table de consultation (16) sur la base de la différence existant entre la vitesse du véhicule et la vitesse de consigne.

4. Procédé selon la revendication 1, 2 ou 3, comportant, lorsqu'on a déterminé que la commande de vitesse était dans le mode de reprise avant débrayage de l'embrayage, l'étape (106) d'accélération du véhicule à une vitesse de consigne en fonction de la différence existant entre la vitesse du véhicule et la vitesse de consigne et en fonction d'une mesure de la vitesse du véhicule.

5. Appareil de commande de vitesse pour commander la vitesse d'un véhicule comportant une transmission pouvant être actionnée sous la commande d'un conducteur, l'appareil de commande de vitesse comportant des moyens de détection (10, 24, C) pour détecter le débrayage et le réenclenchement d'un embrayage de transmission pendant un changement de rapport actionné par le conducteur, des moyens de désactivation (10, 30) répondant aux moyens de détection pour désactiver la commande de vitesse lors du débrayage de l'embrayage, et des moyens d'activation (10, 30) répondant aux moyens de détection pour réactiver la commande de vitesse lors du réenclenchement de l'embrayage ;

caractérisé en ce que l'appareil de commande de vitesse est adapté pour fonctionner dans un mode normal de commande de vitesse de croisière ou un mode de reprise et comporte des moyens de détermination (102) pour déterminer si la commande de vitesse avant débrayage de l'embrayage est dans le mode normal de commande de vitesse de croisière ou le mode de reprise, les moyens d'activation étant adaptés pour remettre la commande de vitesse dans le mode actif avant débrayage de l'embrayage.

6. Appareil de commande de vitesse selon la revendication 5, dans lequel l'appareil de commande de vitesse est adapté pour accélérer le véhicule à une vitesse de consigne en fonction de la différence existant entre la vitesse du véhicule et la vitesse de consigne lorsque la commande de vitesse était dans le mode normal de commande de vitesse de croisière avant débrayage de l'embrayage.

7. Appareil de commande de vitesse selon la revendication 6, comportant une table de consultation (16), l'appareil de commande de vitesse étant adapté pour déterminer l'accélération du véhicule à la vitesse de consigne à partir de la table de consultation sur la base de la différence existant entre la vitesse de véhicule et la vitesse de consigne.

8. Appareil de commande de vitesse selon la revendication 5, 6 ou 7, dans lequel l'appareil de commande de vitesse est adapté pour accélérer le véhicule à une vitesse de consigne, en fonction de la différence existant entre la vitesse du véhicule et la vitesse de consigne et en fonction d'une mesure de la vitesse du véhicule lorsque la commande de vitesse était dans le mode normal de commande de vitesse de croisière avant débrayage de l'embrayage.

# Fig. 1.

EP 0 649 766 B1

# Fig.2.

CLUTCH
RE-ENGAGED

102

IN NORMAL/RESUME MODE ?

NORMAL

RESUME

104

ACCELERATE VEHICLE AS A FUNCTION OF ACCEL 3

106

ACCELERATE VEHICLE AS A FUNCTION OF ACCEL1+ACCEL2

108

CRUISE CONTROL ROUTINE